# EUROPÄISCHE PATENTSCHRIFT

(11) **EP 0 372 186 B1**
(45) Veröffentlichungstag und Bekanntmachung des Hinweises auf die Patenterteilung: **08.06.1994**
(21) Anmeldenummer: 89118190.1
(22) Anmeldetag: 30.09.1989
(51) Int. Cl.: H04N 5/64, H04R 1/02

(54) **Lautsprecherboxen für Fernseh- und andere Geräte**
Loudspeaker boxes for a television set and other apparatuses
Enceintes acoustiques pour téléviseur et autres appareils

(30) Priorität: 19.10.1988 DE 3835539
(43) Veröffentlichungstag der Anmeldung: 13.06.1990
(73) Patentinhaber: Deutsche Thomson-Brandt GmbH, 78003 Villingen-Schwenningen (DE)
(72) Erfinder: Schinnerling, Peter, D-7730 VS Pfaffenweiler (DE)

(56) Entgegenhaltungen:
- DE-A- 3 210 639
- PATENT ABSTRACTS OF JAPAN, Band 8, Nr. 91 (E-241)[1528], 26. April 1984;& JP-A-59 011 095 (MATSUSHITA D.S.)
- PATENT ABSTRACTS OF JAPAN, Band 5, Nr. 95 (E-62)[767], 20. Juni 1981;& JP-A-56 039 696 (MATSUSHITA D.S.)
- PATENT ABSTRACTS OF JAPAN, Band 10, Nr. 170 (E-412)[2226], 17. Juni 1986; & JP-A-61 020 491 (MATSUSHITA D.S.)

## Beschreibung

Die Erfindung betrifft eine Lautsprechereinheit aus zwei Lautsprecherboxen für paarweise Verwendung zur Stereoton-Wiedergabe bei Geräten der Unterhaltungselektronik, vorzugsweise bei Fernsehempfängern, bei denen je eine Lautsprecherbox auf der rechten und linken Seite des Gerätegehäuses angeordnet ist, wobei die Lautsprecherboxen bezüglich einer vertikalen Ebene zueinander spiegelbildliche Konturen haben und jeweils symmetrisch zu ihrer horizontalen Mittellinie ausgebildet sind.

Für die Stereoton-Wiedergabe werden Geräte der Unterhaltungselektronik, insbesondere Stereoton-Fernsehgeräte, mit einer "optisch linken" und einer "optisch rechten" Lautsprecherbox ausgestattet. Diese werden an den Gehäuseseitenwänden befestigt oder können in größerem Abstand zur Verbesserung der Stereowirkung separat aufgestellt werden. Es ist dabei üblich, Lautsprecherboxen mit schmaler Abstrahlfrontseite zu verwenden. Sie sind häufig als 2-Weg-Baßreflexboxen ausgebildet, d. h. sie enthalten ein oder zwei Tiefmitteltöner (TMT), einen (Kalotten-)Hochtöner (HT) und eine Baßreflexöffnung (BR), die mit einem eingesteckten Rohr bestimmter Länge abgestimmt sein kann. Diese Bestückung ist entlang einer vertikalen, gedachten Linie ausgeführt. Um klangliche und ästhetische Einbußen zu vermeiden, ist es erforderlich, jeweils den Hochtöner (HT) oben, den oder die Tiefmitteltöner (TMT) in der Mitte und die BaßreflexÖffnung (BR) unten anzuordnen. Bislang war es deshalb erforderlich, "linke" und "rechte" Boxen dieser Art zu fertigen, zumal die Schallwände bzw. Abstrahlfronten dieser Boxen nicht gleich, sondern aus Design-Gründen spiegelbildlich symmetrisch sind. Deshalb war die Fertigung teuer.

Eine derartige Anordnung wird in der DE-A-3 210 639 beschrieben, bei der zwei Lautsprecherboxen rechts und links angebracht werden können und welche über Verbindungselemente mit dem Fernsehempfangsgerät mechanisch und elektrisch verbindbar sind. Hierbei sind aber die beiden Lautsprecherboxen unterschiedlich ausgebildet, die jeweils nur für die rechte und linke Seite vorgesehen sind. Es handelt sich also um zwei unterschiedliche Konstruktionen im inneren Aufbau.

Es ist aus Patent Abstracts of Japan, Band 10, Nr.170 (E-412)(2226), 17. Juni 1986; JP - A-61 020 491 auch bekannt, im Gehäuse einer Lautsprecherbox eine Baßreflexöffnung anzuordnen. In dieser Schrift wird jedoch nicht auf die der Anmeldung zugrundeliegende Aufgabe eingegangen, die darin besteht, eine billigere Fertigung zu ermöglichen, die ästhetischen und akustischen Eigenschaften einer Stereolautsprecheranordnung aber nicht zu verschlechtern. Diese Aufgabe wird erfindungsgemäß nach dem ersten Anspruch gelöst. Weitere Einzelheiten und Ausgestaltungen sind den Unteransprüchen und der Beschreibung zu entnehmen.

Wenn die Öffnungen und die Befestigungslöcher für Hochtöner (HT) und Baßreflexöffnung (BR) gleich ausgeführt werden, ist es vorteilhafterweise möglich, allein durch die Zuordnung der Hochtöner (HT) und der Baßreflexöffnungen zu den oberen und unteren Schallwandöffnungen und den ihnen zugeordneten Befestigungslöchern Paare von Lautsprecherboxen zu erzeugen, die gleichartige Gehäuse und Schallwände verwenden und gleichartiges Abstrahlverhalten besitzen.

Die Erfindung wird nachstehend mit Hilfe der Zeichnung an einem Ausführungsbeispiel beschrieben.
Figur 1a und b zeigt Lautsprecherboxen bekannter Art an den Seiten eines Fernsehgerätes bzw. getrennt von einem Fernsehgerät aufgestellt;
Figur 2a und b eine optisch "linke" Box von vorne bzw. mit Blick auf die unbestückte Schallwand der gleichen Box von hinten.

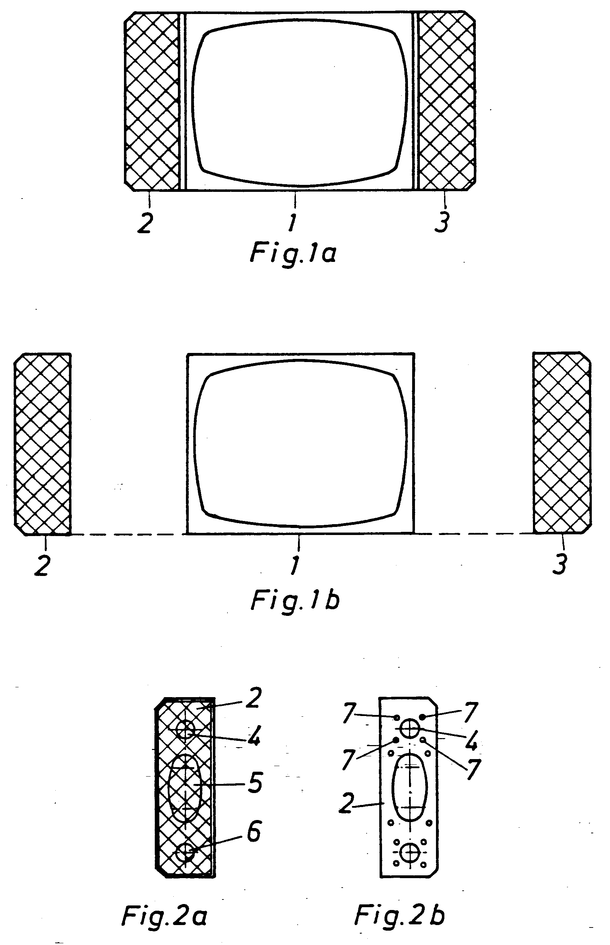

Ausgehend vom Stand der Technik, wie er beispielhaft in den Figuren 1a und 1b dargestellt ist, wird ein Fernsehgerätegehäuse mit seitlich befestigten Lautsprecherboxen 2 und 3 gezeigt, bzw. mit entfernt vom Fernsehgerätegehäuse 1 seitlich aufgestellten Lautsprecherboxen 2 und 3. Hierbei wird durch Vergrößerung der sogenannten Stereobasis die Stereowirkung verbessert.

Am Beispiel der "optisch linken" Box aus Figur 1a und 1b wird nun die erfindungsgemäße Lösung in den Figuren 2a und 2b gezeigt. Figur 2a läßt die Durchbrüche der Lautsprecher, die rückseitig montiert sind, erkennen, nämlich oben den Hochtöner (HT) 4, darunter den Tiefmitteltöner (TMT) 5 und darunter die Baßreflexöffnung (BR) 6. Figur 2b zeigt die Schallwand der Box der Figur 2a von hinten mit den Befestigungslöchern 7 für alle drei Lautsprecher, die hier noch nicht montiert sind.

Die öffnungen für den Hochtöner (HT) 4 oben und die dazugehörigen Befestigungslöcher 7 entsprechen, sowie ebensolche öffnung für die Baßreflexöffnung und Befestigungslöcher 7, die hier allerdings nicht gebraucht werden. Das Einsteckrohr für die möglicherweise gewünschte oder erforderliche Abstimmung wird nur eingeschoben und evtl. verklebt. Die hier nicht gezeigte "optisch rechte" Box ist spiegelbildlich symmetrisch und läßt sich ebenso von oben nach unten bestücken. Dadurch ist die wesentlich billigere Herstellung nur einer Lautsprecherbox möglich, die durch die Bestückung als linke oder rechte ausgewiesen wird.

## Patentansprüche

1. Lautsprechereinheit aus zwei Lautsprecherboxen für paarweise Verwendung zur Stereotonwiedergabe bei Geräten der Unterhaltungselektronik, vorzugsweise bei Fernsehempfängern, bei der je eine Lautsprecherbox (2, 3) auf der rechten und linken Seite des Gerätegehäuses (1) angeordnet ist, wobei die Lautsprecherboxen bezüglich einer vertikalen Ebene zueinander spiegelbildliche Konturen haben und jeweils symmetrisch zu ihrer horizontalen Mittellinie ausgebildet sind,
dadurch gekennzeichnet, daß die Schallwände der Lautsprecherboxen längs einer vertikalen Linie mit je einem Hochtonlautspre-cher (HT), einem Tiefmitteltonlautsprecher (TMT) und einem Baßreflexkanal (BR) versehen sind, wobei die öffnung (5) für den Tiefmitteltonlautsprecher (TMT) jeweils symmetrisch zur horizontalen Mittellinie der Lautsprecherbox (2, 3) angeordnet ist, daß die öffnungen (4, 6) in den Schallwänden der beiden Lautsprecherboxen für die Hochtonlautsprecher und die Baßreflexkanäle (BR) symmetrisch zur horizontalen Mittellinie der Schallwände spiegelbildlich angeordnet sind, und daß die öffnungen sowohl für die Hochtonlautsprecher als auch für die Baßreflexkanäle gleiche Abmessungen besitzen und als öffnung (4, 6) wahlweise für Hochtonlautsprecher (HT) oder Baßreflexkanäle (BR) verwendbar sind.

2. Lautsprechereinheit aus zwei Lautsprecherboxen für paarweise Verwendung nach Anspruch 1, **dadurch gekennzeichnet,** daß bei der rechten wie auch bei der linken Lautsprecherbox der Hochtöner (HT) jeweils oben und der Baßreflexkanal (BR) jeweils unten angeordnet ist.

3. Lautsprechereinheit aus zwei Lautsprecherboxen für paarweise Verwendung nach den Ansprüchen 1 und 2, **dadurch gekennzeichnet**, daß die Baßreflexkanäle (BR) durch Einsteck-Rohre bestimmter Länge gleichartig abgestimmt sind.

4. Lautsprechereinheit aus zwei Lautsprecherboxen für paarweise Verwendung nach den Ansprüchen 2 oder 3, **dadurch gekennzeichnet**, daß die Befestigungslöcher (7) oder - mittel bei den öffnungen (4, 6) für Hochtöner (HT) bzw. Baßreflexkanal (BR) gleichartig ausgebildet sind.

5. Lautsprechereinheit aus zwei Lautsprecherboxen für paarweise Verwendung gemäß Anspruch 1, **dadurch gekennzeichnet**, daß der Tiefmitteltöner (TMT) jeweils in der Mitte angeordnet ist, d.h. zwischen Hochtöner (HT) und Baßreflexkanal (BR).

## Claims

1. A loudspeaker unit comprising two loudspeaker boxes far use as a pair for stereo-sound reproduction in consumer electronics devices, preferably in television receivers, in which one loudspeaker box (2,3) is arranged on each of the right and left sides of the housing (1) of the device, in which the loudspeaker boxes have mirror-symmetrical shapes with reference to a vertical plane and are each constructed symmetrically relative to their horizontal centre line,
characterised in that the acoustic baffles of the loudspeaker boxes are each provided along a vertical line with a treble loudspeaker (HT), a low-medium-frequency loudspeaker (TMT) and a base reflex channel (BR), in which the opening (5) for the low-medium-frequency loudspeaker (TMT) is arranged in each case symmetrically to the horizontal centre line of the loudspeaker box (2,3), in that the openings (4,6) in the acoustic baffles of both the loudspeaker boxes for the treble loudspeakers and the base reflex channels (BR) are arranged mirror-symmetrically to the horizontal centre line of the acoustic baffles, and in that the openings for both the treble loudspeakers and for the base reflex channels have the same dimensions and can be selectively used as an opening (4,6) for treble loudspeakers (HT) or base reflex channels (BR).

2. A loudspeaker unit comprising two loudspeaker boxes for use as a pair according to claim 1, characterised in that for the right-hand side and also for the left-side loudspeaker box the tweeter (HT) is in each case arranged above and the base reflex channel (BR) is in each case arranged below.

3. A loudspeaker unit comprising two loudspeaker boxes for use as a pair according to claims 1 and 2, characterised in that the base reflex channels (BR) are tuned in similar manner by plug-in tubes of defined length.

4. A loudspeaker unit comprising two loudspeaker boxes for use as a pair according to claims 2 or 3, characterised in that the fixing holes (7) or means in the openings (4,6) for tweeter (HT) or base reflex channel (BR) are constructed in similar manner.

5. A loudspeaker unit comprising two loudspeaker boxes for use as a pair according to claim 1, characterised in that the low-medium-frequency loudspeaker (TMT) in arranged in each case in the centre, i.e between tweeter (HT) and base reflex channel (BR).

## Revendications

1. Unité de haut-parleur composée de deux enceintes pour utilisation par paire pour la reproduction stéréo du son pour des appareils de l'électronique de loisirs, de préférence pour des récepteurs de télévision, pour laquelle une enceinte (2, 3) est placée respectivement sur le côté gauche et sur le côté droit du bâti de l'appareil (1), les enceintes ayant des contours réfléchis l'un par rapport à l'autre par rapport à un plan vertical et étant configurées respectivement symétriquement par rapport à leur ligne de milieu horizontale,
caractérisée en ce que les écrans acoustiques des enceintes sont pourvus le long d'une ligne verticale chacun d'un haut-parleur aigu (HT), d'un haut-parleur pour les médiums (TMT) et d'un canal bass-reflex (BR), l'ouverture (5) pour le haut-parleur pour les médiums (TMT) étant placée respectivement symétriquement par rapport à la ligne de milieu horizontale de l'enceinte (2, 3), que les ouvertures (4, 6) dans les écrans acoustiques des deux enceintes pour le haut-parleur aigu et les canaux bass-reflex (BR) sont placées en étant réfléchies de manière symétrique par rapport à la ligne de milieu horizontale des écrans acoustiques et que les ouvertures ont les mêmes dimensions aussi bien pour les haut-parleurs aigus que pour les canaux bass-reflex et peuvent être utiliées comme ouverture (4, 6) au choix pour le haut-parleur aigu (HT) ou les canaux bass-reflex (BR).

2. Unité de haut-parleur composée de deux enceintes pour l'utilisation par paire selon la revendication 1, caractérisée en ce que pour l'enceinte droite aussi bien que pour l'enceinte gauche le haut-parleur aigu (HT) est respectivement placé en haut et le canal bass-reflex (BR) respectivement en bas.

3. Unité de haut-parleur composée de deux enceintes pour l'utilisation par paire selon les revendications 1 et 2, caractérisée en ce que les canaux bass-reflex (BR) sont accordés de la même manière par des tubes à emboîter d'une certaine longueur.

4. Unité de haut-parleur composée de deux enceintes pour l'utilisation par paire selon les revendications 2 ou 3, caractérisée en ce que les trous de fixation (7) ou les moyens de fixation sont configurés de même type pour les ouvertures (4, 6) pour les haut-parleurs aigus (HT) ou le canal bass-reflex (BR).

5. Unité de haut-parleur composée de deux enceintes pour l'utilisateur par paire selon la revendication 1, caractérisée en ce que le haut-parleur des médiums (TMT) est placé respectivement au milieu, c'est-à-dire entre le haut-parleur aigu (HT) et le canal bass-reflex (BR).
